# EUROPÄISCHE PATENTANMELDUNG

(11) **EP 4 534 478 A1**
(43) Veröffentlichungstag der Anmeldung: **09.04.2025**
(21) Anmeldenummer: 24203244.9
(22) Anmeldetag: 27.09.2024
(51) Int. Cl.: C01B 32/00, C01B 32/05, C01B 32/30, C01B 32/354

(54) **MESOPORÖSE HOCH LEITFÄHIGE KOHLENSTOFF-AEROGEL-KOMPOSITE AUF BASIS VON CHITOSAN**

(30) Priorität: 28.09.2023 DE 102023126540
(71) Anmelder: Deutsches Zentrum für Luft- und Raumfahrt e.V., 53227 Bonn (DE)
(72) Erfinder: DZIERBINSKI, Adam, 50676 Köln (DE); MILOW, Barbara, 50354 Hürth (DE); SCHWAN, Marina, 51377 Leverkusen (DE); RAEDER, Niels, 80799 München (DE); MERZ, Holger, 65779 Kelkheim (DE); KAISER, Christian, 83626 Valley (DE)
(74) Vertreter: dompatent von Kreisler Selting Werner - Partnerschaft von Patent- und Rechtsanwälten mbB

(57) **Zusammenfassung**

Gegenstand der Erfindung ist ein Kohlenstoff-Aerogel-Komposit auf der Basis von Chitosan und recycelter Aktivkohle (rCB) sowie ein Verfahren zu seiner Herstellung.

## Beschreibung

Gegenstand der Erfindung ist ein Kohlenstoff-Aerogel-Komposit auf der Basis von Chitosan und recycelter Aktivkohle (recovered carbon black, rCB) sowie ein Verfahren zu seiner Herstellung.

Aus der WO 2020/020810 A1 ist recycelte Aktivkohle auch unter dem Begriffen "recovered Carbon Black (rCB)" bzw. "Rückgewinnungsruß" und "recycelte Aktivkohle" bekannt.

Auch aus Sebastião M. R. Costa, David Fowler, Germano A. Carreira, Inês Portugal, and Carlos M. Silva (Production and Upgrading of Recovered Carbon Black from the Pyrolysis of End-of-Life Tires) Materials 2022, 15, 2030. https://doi.org/10.3390/ma15062030 ist ein entsprechendes Material beschrieben.

Weiterhin beschreiben Somi Doja, Lava Kumar Pillari und Lukas Bichler, Renewable and Sustainable Energy Reviews 155 (2022) 111860; Processing and activation of tire-derived char: A review; unter anderem die Entmineralisierung von Ruß mit Säure vor oder nach der Aktivierung.

Auch ist ein entsprechendes Verfahren aus Costa, S. M. R., et al. (2022). "Production and Upgrading of Recovered Carbon Black from the Pyrolysis of End-of-Life Tires." Materials 15(6): 2030 und Yuan, C.-S., et al. (2004). "Preparation of Sulfurized Powdered Activated Carbon from Waste Tires Using an Innovative Compositive Impregnation Process." Journal of the Air & Waste Management Association 54(7): 862-870 bekannt.

WO 2013/095145A1 und der hier referierte Stand der Technik beschreiben ein entsprechendes Material. Die recycelte Aktivkohle (Rückgewinnungsruß) setzt sich aus etwa 99,4 Gew.-% Kohlenstoff; 0,1 Gew.-% Silizium und 0,5 Gew.-% Schwefel.

Marina Schwan, Somi Doja, DLR-Magazin, 2020, 164, S. 30-31 beschreiben allgemein die Verwendung von Reifenabfällen, insbesondere Ruß in Form von recycelter Aktivkohle für Anodenmaterial von LIB. Durch einen thermischen Prozess (Pyrolyse) werden unter Ausschluss von Sauerstoff Altreifen aufbereitet. Hierbei werden die organischen Verbindungen des Altreifens zunächst aufgespalten. Die im Prozess entstehenden Gase werden kondensiert, wodurch sogenanntes TPO (Tire Pyrolysis Oil) entsteht. Das erzeugte Öl wird beispielsweise zur Energieerzeugung für industrielle Prozesse genutzt oder in Raffinerien weiterverarbeitet. Am Ende des Prozesses verbleibt ein kohlenstoffhaltiger Wertstoff - das sogenannte Roh-recovered Carbon Black (siehe auch WO 2013/095145A1).

Kohlenstoff-Aerogele (CA) sind dreidimensionale, offenporige, amorphe Materialien, die durch Karbonisierung von organischen Aerogelen hergestellt werden (z. B. Biopolymere oder Materialien auf Biomasse- und Phenolbasis). Einzigartige Eigenschaften von Kohlenstoff-Aerogelen wie gut kontrollierte Porosität, große spezifische Oberfläche, elektrische Leitfähigkeit und geringe umhüllende Dichte machen sie zu vielversprechenden Materialien für Anwendungen als Elektrodenmaterial in Batterien. Die elektrische Leitfähigkeit von amorphen Kohlenstoffmaterialien hängt mit ihrer elektronischen Struktur, der Anteil graphitischer Strukturen oder graphitischem Charakter und Heteroatomen zusammen. Hierfür bieten sich besonders Ausgangsstoffe wie Chitin oder Chitosan an, deren Struktur bereits Heteroatome (insbesondere Stickstoff) enthält.

Die umhüllende Dichte und die elektrische Leitfähigkeit korrelieren gut zusammen. Kohlenstoff-Aerogele mit hoher Dichte zeigen eine hohe elektrische Leitfähigkeit. Dies liegt daran, dass in einem dichten Netz mehr Transportwege vorhanden sind, als in einem mit weniger Verknüpfungen. Einen weiteren Einfluss auf die elektrische Leitfähigkeit hat demnach auch die Porenstruktur des Materials. Weiterhin wirkt sich die Karbonisierungstemperatur sowie eine ggf. anschließende Aktivierung (z.B. mit CO₂) auf die elektrische Leitfähigkeit von Kohlenstoff-Aerogelen aus. Die elektrische Leitfähigkeit von Chitosan-basiertem Kohlenstoff-Aerogel, das bei 800 °C für 1 h in N₂ karbonisiert und für 1 h in CO₂ aktiviert wurde, liegt bei etwa 44 S/m. Mit steigender Temperatur nimmt die elektrische Leitfähigkeit zu.

Graphit ist aufgrund seiner geringen Kosten ein verbreitetes, kommerziell erhältliches Material. Der größte Nachteil besteht darin, dass die Graphitherstellung ein energie- und zeitintensiver Prozess ist. Sowohl die Naturgraphitverarbeitung als auch die Produktion von dem synthetischen Graphit verursachen CO₂-Emissionen, aber auch die Freisetzung von NOₓ und SOₓ Verbindungen, sowie Partikelemissionen. Die Zugabe von elektrisch leitfähigen Additiven wie Carbon Black kann die Leitfähigkeit deutlich erhöhen. Andere Additive wie Graphen, Kohlenstoffröhrchen sowie reduziertes Graphen Oxid werden aufgrund der hohen Produktionskosten seltener verwendet. Ein wiedergewonnener Ruß (engl. recovered Carbon Black rCB) hergestellt aus Altreifen stellt eine Alternative dar.

Die wichtigsten Nachteile der bekannten Kohlenstoffmaterialien sind die vergleichsweise geringe Kapazität, das höhere Gewicht und Auswirkungen des aktuellen Stands der Technik auf Menschen und Umwelt. Beim Abbau von natürlichem Graphit werden gesundheitlich bedenkliche Feinstäube freigesetzt, während bei der synthetischen Graphitherstellung hohe Temperaturen benötigt werden, die einen großen CO₂-Fußabdruck zur Folge haben.

Aufgabe der vorliegenden Erfindung ist es, die Eigenschaften von Kohlenstoff-Aerogelen zu optimieren, insbesondere deren elektrische Leitfähigkeit, zu verbessern.

Zur Lösung der Aufgabe stellt die vorliegende Erfindung einen Komposit bereit, dessen Material ein Chitosan-Aerogel umfasst. Es ist zu erwarten, dass Chitosan-Aerogele aufgrund ihres hohen Porenvolumens eine gegenüber Graphit höhere Kapazität im Anwendungsbereich von Li-Ionen-Batterien aufweisen.

Die Erfindung betrifft ein leitfähiges Kompositmaterial, welches ein Chitosan-Aerogel und recovered Carbon Black umfasst, insbesondere daraus besteht.

Eine erste Ausführungsform der Erfindung besteht in einem Kohlenstoff-Aerogel-Komposit auf der Basis von Chitosan und recycelter Aktivkohle (rCB), das dadurch gekennzeichnet ist, dass die Aktivkohle (rCB) frei von Asche, silikatischen Verbindungen und Zinkkomponenten ist und das Komposit eine Leitfähigkeit, gemessen mit der Vier-Punkt-Methode von wenigstens 20 S/m gemessen bei einem Druck von 3 MPa hat.

In einer bevorzugten Ausführungsform der Erfindung ist das vorgenannte Komposit dadurch gekennzeichnet, dass es 1 bis zu 90 Gew.-% der Aktivkohle (rCB) bezogen auf die Menge an Aerogel enthält.

Die erfindungsgemäßen Aerogel-Komposite auf der Basis von Chitosan können nach verschiedenen Verfahren hergestellt werden.

Besonders bevorzugt ist ein Verfahren, das dadurch gekennzeichnet ist, dass man
(a) recycelte Aktivkohle (rCB) während der Synthese des Aerogels der Polymer-Lösung des Chitosans zugibt oder
(b) die Aktivkohle mit dem auf Chitosan basierten gegebenenfalls karbonisierten Aerogel vermischt und
(c) die Karbonisierung des gemäß (a) oder (b) erhaltenen Materials nach an sich bekannten Verfahren durchführt.

Die vorgenannte Aufgabe wurde gelöst, in dem ein besonderes Kohlenstoff-Aerogel auf Basis von nachwachsenden Rohstoffen, hier aus dem Biopolymer Chitosan mit dem Ruß aus Altreifen (recovered Carbon Black, rCB) kombiniert wurde. Diese Kombination kann die elektrische Leitfähigkeit deutlich verbessern.

Während übliche Resorcin-Melamin-Formaldehyd- (RMF)-basierte Kohlenstoff-Aerogele eine mikroporöse Struktur aufweisen, liegt hier vornehmlich eine Meso- und Makroporosität vor. Das wird auch aus den angegebenen Werten zu den Porenvolumina der Mikro-, bzw. Meso- und Makroporen ersichtlich. Mesoporöse Kohlenstoff-Aerogele einschließlich der hier beschriebenen Chitosan-Aerogele zeigten eine geringere Leitfähigkeit. Die Karbonisierungstemperatur hat einen großen Einfluss auf die elektrische Leitfähigkeit von diesen Kohlenstoff-Aerogelen. Mit steigender Temperatur zwischen 600 °C und 2500 °C nimmt die elektrische Leitfähigkeit zu. Die Zugabe von elektrisch leitfähigen Additiven kann die Leitfähigkeit deutlich erhöhen. Auch die bei gleicher Karbonisierungstemperatur erhaltenen spezifischen Oberflächen unterscheiden sich (RMF-basiertes CA: 634 m²/g, Chitosan-basiertes CA: 445 m²/g).

In einer bevorzugten Ausführungsform der Erfindung ist das oben genannte Komposit dadurch gekennzeichnet, dass es überwiegend meso- und makroporös ist, wobei insbesondere das Meso- und Makroporenvolumen gemessen mit Stickstoffsorption bei 77 K bei mindestens 0,1 cm³/g, insbesondere mindestens 0,4 cm³/g beträgt.

Besonders bevorzugt im Sinne der Erfindung ist das vorgenannte Komposit dadurch gekennzeichnet, dass das resultierende Aerogel oder Komposit kugel-, reis-, beziehungsweise nudelförmig ist, wobei die Aktivkohle (rCB) im Aerogel homogen verteilt ist.

In einer weiteren bevorzugten Ausführungsform der Erfindung ist das vorgenannte Komposit dadurch gekennzeichnet, dass es Stickstoff in der Struktur bestimmt mittels Elementaranalyse von mindestens 1,5 Gew.-% enthält. Das Einbringen von Stickstoff in die Struktur der Aerogel-Komposite erfolgt durch Einbringen von Stickstoffgas während der Karbonisierung bei Temperaturen um 1000 °C. Der Stickstoff ist naturgemäß bereits im Ausgangsmaterial (Chitosan) in der Struktur vorhanden und findet sich daher auch im karbonisierten Produkt wieder.

Erfindungsgemäße Chitosan-basierte Kohlenstoff-Aerogele können Stickstoff in der Struktur enthalten. Der in der Struktur der Aerogele vorhandene Stickstoff kann als Nitro (-C-N⁺-O⁻)-, Amino (-C-NH₂)-Stickstoff oder als graphitischer, pyridinischer oder/und pyrrolischer Stickstoff vorliegen. Jede Konfiguration hat unterschiedliche Auswirkungen auf die elektronischen Transporteigenschaften. Während die Wirkung von Nitro- und Amino-Stickstoffatomen vernachlässigt werden kann, haben strukturelle Stickstoffatome, wie pyridinischer und pyrrolischer Stickstoff, einen erheblichen Einfluss auf die elektrische Leitfähigkeit des porösen Kohlenstoffs. Der strukturelle Stickstoff ersetzt Kohlenstoffatome innerhalb des Kohlenstoffgitters und trägt somit p-Elektronen zum n-konjugierten System bei. Somit beeinflussen die verschiedenen Stickstoffdotierungen die elektronische Bandstruktur und damit die Gesamtleitfähigkeit des Kohlenstoffmaterials. Das Weitern, sind die Menge der strukturellen Stickstoffatome und die Verteilung der Stickstoffatome von großer Bedeutung, was bei der Korrelation der Leitfähigkeiten mit der Stickstoffkonzentration berücksichtigt werden soll.

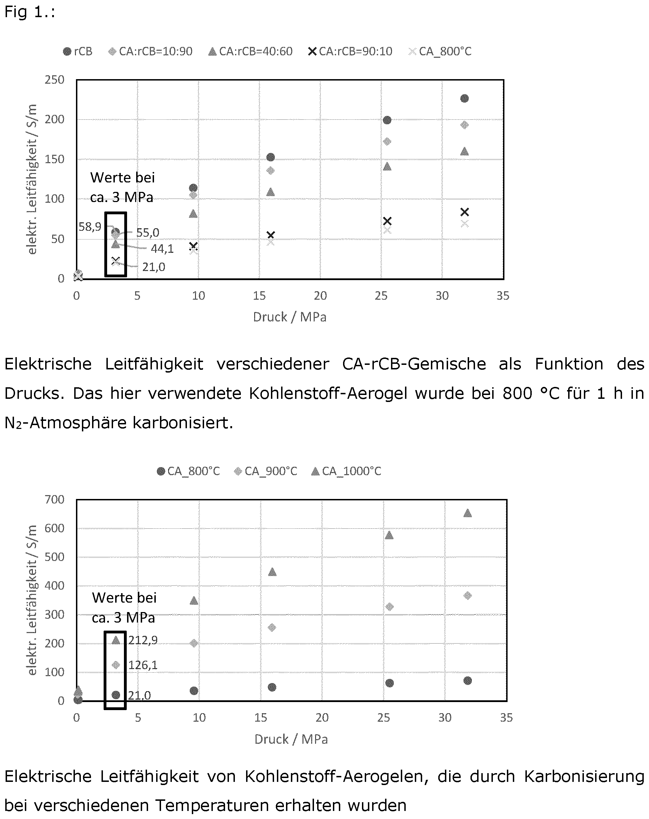

Die hier beschriebenen Chitosan-Aerogel-Komposite besitzen eine hohe elektrische Leitfähigkeit (Fig. 1). Die Kombination des Chitosan-Aerogels mit dem Additiv rCB führt zu einer höheren elektrischen Leitfähigkeit. Diese steigt mit dem Anteil des Additivs an.

Fig. 1 zeigt die elektrische Leitfähigkeit des Kohlenstoff-Aerogel-Gemischs mit 10, 40 und 90 Gew.-% Kohlenstoff-Aerogel sowie elektrische Leitfähigkeiten von reinem recovered Carbon Black (rCB) und reinem Kohlenstoff-Aerogel und die elektrische Leitfähigkeit des Kohlenstoff-Aerogels mit eigener Skalierung sowie die elektrische Leitfähigkeit eines bei einer Karbonisierungstemperatur von 1000 °C in N₂ erhaltenen Kohlenstoff-Aerogels im Vergleich zu recovered Carbon Black (unten).

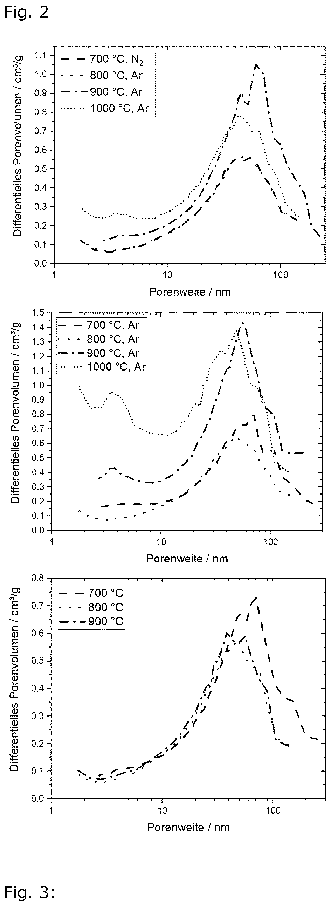

Fig. 2 zeigt die Porengrößenverteilung von Kohlenstoff-Aerogelen, die durch Karbonisierung von Chitosan-Aerogelen erhalten wurden (links: Karbonisierung für 1 h, rechts: Karbonisierung für 2 h, unten Karbonisierung in N₂ für 1 h und Aktivierung in CO₂ für 1 h). Die Porengrößenverteilung von RMF-basierten CA, nur zur Veranschaulichung dargestellt.

Einen Überblick über die Ergebnisse der Porenvolumina (V_{P}), Mikroporenvolumina (V_{Micro}), BET-Oberflächen (S_{BET}), Mikroporenoberflächen (S_{Micro}) und Meso- und Makroporenoberflächen (S_{Ext}) liefern die folgenden Tabellen.

| | | **V_{P} / cm³/g** | **V_{Micro} / cm³/g** | **V_{Rest} / cm³/g** | **S_{BET} / m²/g** | **S_{Micro} / m²/g** | **S_{Ext} / m²/g** | **Massenverlust/ %** |
|---|---|---|---|---|---|---|---|---|
| **t / h** | **T / °C** | **Total** | **Micro** | **Meso + Macro** | **Total** | **Micro** | **Meso + Macro** | |
| 1 | 700 | 0.604 | 0.108 | 0.496 | 381 | 264 | 117 | 78 |
| 1 | 800 | 0.626 | 0.132 | 0.494 | 445 | 325 | 120 | 80 |
| 1 | 900 | 1.057 | 0.227 | 0.830 | 760 | 565 | 195 | 84 |
| 1 | 1000 | 1.103 | 0.329 | 0.774 | 1104 | 825 | 279 | 88 |

| | | **V_{P} / cm³/g** | **V_{Micro} / cm³/g** | **V_{Rest} / cm³/g** | **S_{BET} / m²/g** | **S_{Micro} / m²/g** | **S_{Ext} / m²/g** | **Massenverlust/ %** |
|---|---|---|---|---|---|---|---|---|
| **t / h** | **T / °C** | **Total** | **Micro** | **Meso + Macro** | **Total** | **Micro** | **Meso + Macro** | |
| 2 | 700 | 0.808 | 0.081 | 0.727 | 401 | 185 | 216 | 79 |
| 2 | 800 | 0.723 | 0.170 | 0.553 | 552 | 422 | 130 | 81 |
| 2 | 900 | 1.627 | 0.348 | 1.279 | 1266 | 844 | 422 | 90 |
| 2 | 1000 | 2.057 | 0.399 | 1.658 | 1795 | 951 | 844 | 95 |

| | | **V_{P} / cm³/g** | **V_{Micro} / cm³/g** | **V_{Rest} / cm³/g** | **S_{BET} / m²/g** | **S_{Micro} / m²/g** | **S_{Ext} / m²/g** | **Massenverlust/ %** |
|---|---|---|---|---|---|---|---|---|
| **T / °C** | **t / h** | **Total** | **Micro** | **Meso + Macro** | **Total** | **Micro** | **Meso + Macro** | |
| 700 | 1 | 0.604 | 0.108 | 0.496 | 381 | 264 | 117 | 78 |
| 700 | 2 | 0.808 | 0.081 | 0.727 | 401 | 185 | 216 | 79 |
| 700 | 3 | 0.629 | 0.108 | 0.521 | 382 | 262 | 120 | 76 |

| | | | **V_{P} / cm³/g** | **V_{Micro} / cm³/g** | **V_{Rest} / cm³/g** | **S_{BET} / m²/g** | **S_{Micro}** / **m²/g** | **S_{Ext} / m²/g** | **Massenverlust/ %** |
|---|---|---|---|---|---|---|---|---|---|
| **t(N₂) / h** | **t(CO₂) / h** | **T / °C** | **Total** | **Micro** | **Meso + Macro** | **Total** | **Micro** | **Meso + Macro** | |
| 1 | 1 | 700 | 0.748 | 0.098 | 0.650 | 381 | 230 | 151 | 76 |
| 1 | 1 | 800 | 0.592 | 0.104 | 0.488 | 373 | 255 | 118 | 78 |
| 1 | 1 | 900 | 0.696 | 0.187 | 0.509 | 602 | 473 | 129 | 82 |

Fig. 3 beschreibt eine Elementaranalyse von Kohlenstoff-Aerogelen, die durch Karbonisierung mit und ohne Aktivierung durch CO₂ von Chitosan-Aerogelen erhalten wurden. Der Stickstoff-Gehalt der Kohlenstoff-Aerogele sinkt mit steigender Karbonisierungstemperatur. Der gleiche Trend ist für die Aktivierung der Materialien mittels CO₂ erkennbar.

Fig. 4 umfasst rasterelektronenmikroskopische Aufnahmen eines Chitosan-Aerogels (links) und des entsprechend bei einer Karbonisierungstemperatur von 800 °C erhaltenen Kohlenstoff-Aerogels (rechts).

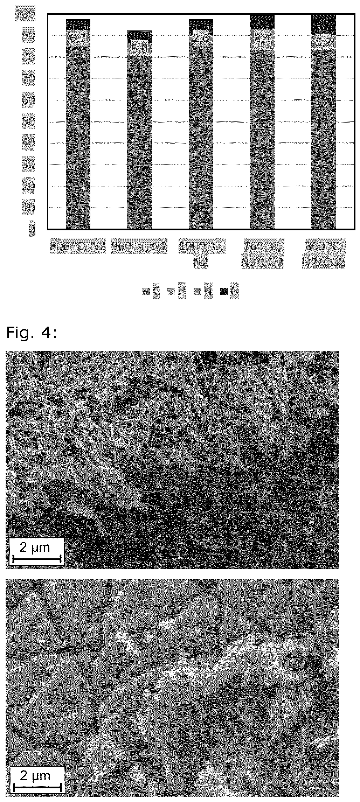

Die elektronenmikroskopischen Aufnahmen zeigen, dass die für Polysaccharide typische, fibrillare Struktur erzielt werden konnte (Fig. 4 links). Diese Struktur ist auch im erhaltenen Kohlenstoff-Aerogel erkennbar (Fig. 4 rechts). Daraus folgt, dass eine Änderung der Chitosan-Aerogel-Struktur sich ebenfalls auf das daraus erhaltene Kohlenstoff-Aerogel auswirken muss.

Der Herstellungsprozess von Chitosan-Aerogelen erlaubt im Gegensatz zu RMF-basierten Aerogelen (nur Monolithe möglich) eine variablere Formgebung, was in erster Linie auf die schnellere Gelierung von Chitosan zurückzuführen ist. Hier sind sowohl Beads, die mittels Strahlschneideverfahren (Jet Cutter) erzeugt werden können, als auch nudelartige Geometrien durch Extrusion möglich. Insbesondere mit Hilfe des ersteren Verfahrens lassen sich variable Größe der Beads herstellen, die je nach späterer Anwendung unter Umständen nicht mehr weiter prozessiert (beispielsweise durch Mahlen) werden müssen, da nach Gelation, Alterung, Trocknung und vor allem der Karbonisierung eine starke Schrumpfung der Materialien bei gleichzeitigem Massenverlust eintritt.

Es handelt sich darüber hinaus bei der Gelation von Chitosan streng genommen auch nicht um einen Sol-Gel-Prozess wie bei R(M)F- oder Silica-Aerogelen, sondern um ein Lösen von Polymeren, die hinterher zur Gelierung in einem Regenerationsbad unlöslich gemacht werden.

Bei RMF-basierten Gelen können aufgrund einer sehr schnellen Gelierung und rasch steigender Viskosität nur begrenzt homogene Komposite hergestellt werden. Bei einer Additivzugabe vor dem Viskositätsanstieg tritt eine Sedimentation von rCB in der Lösung auf. Wird Additiv in eine bereits hochviskose Lösung gegeben, bilden sich Agglomerate, sodass keine regelmäßige Verteilung von rCB im Gel erreicht werden kann. Im Gegensatz dazu wird bei der Zugabe von rCB während der Herstellung von Chitosan-Gelen die Sedimentation beziehungsweise Agglomeratbildung aufgrund der bereits vor Gelierung hohen Viskosität der Lösung als unwahrscheinlich betrachtet.

Wird Chitosan zunächst zu Aerogelen verarbeitet und anschließend karbonisiert, entfällt im Gegensatz zu RMF-basierten Materialien hier auch ein weiterer Waschgang nach der Karbonisierung, da hier keine Salze mehr entfernt werden müssen. Das kann potentiell als Vorteil betrachtet werden, da durch diesen Prozess eine mechanische Anbindung zwischen dem rCB und dem CA aufgebrochen werden könnte.

### Bestimmung der elektrischen Leitfähigkeit

Die elektrische Leitfähigkeit der Komposite wurde mit dem Widerstandsmesssystem Loresta GX (Mitsubishi Chemical Europe) untersucht. Dieses System basiert auf der 4-Pin-Messmethode des Oberflächenwiderstandes in Anlehnung an IS K 7194:1994 (Testing Method For Resistivity Of Conductive Plastics With A Four-Point Probe Array). Der Strom fließt dabei durch die äußeren Stifte 1 und 4, der zu einer messbaren Potentialdifferenz zwischen den beiden inneren Stiften führt. Diese Potentialdifferenz ist abhängig vom Oberflächenwiderstand des Probenmaterials, der wiederum auf den Volumenwiderstand und damit die elektrische Leitfähigkeit umgerechnet wird. Diese Berechnungen sind im Messsystem Loresta GX implementiert. Die Messungen wurden im Druckbereich 3 bis 28 MPa durchgeführt.

### Ausführungsbeispiel:

### Herstellung von Kohlenstoff-Aerogel-Kompositen

### • Ansetzen der Lösung und Gelierung

o Als erstes wurden 8 L destilliertes Wasser in einem Eimer abgefüllt. Anschließend wurden 3 Gew.-% (240 g) Chitosan-Pulver hierin mit Hilfe eines KPG-Rührers mit Dissolverscheibe dispergiert. Anschließend wurden in einem Schwung 3 Gew.-% Eisessig (240 g) zugegeben und für 2 h bei 500-700 rpm gerührt. Die Lösung wurde über Nacht stehen gelassen, damit entstandene Luftblasen an die Oberfläche treiben konnten.
∘ Am nächsten Tag wurde die Dissolverscheibe auf 1/3 bzw. 2/3 der Füllhöhe der Flüssigkeit eingestellt und die Lösung auf jeder Höhe für jeweils 20 Minuten bei gleicher Rührgeschwindigkeit gerührt. Zur Qualitätskontrolle wurde anschließend eine Probe genommen, deren Viskosität mittels RotaVisc oder Rheometer bestimmt wurde.
∘ Für das zur Gelierung benötigte Regenerationsbad wurden 10 L Wasser in eine Schüssel gegeben, in der mit Hilfe eines KPG-Rührers 2,5Gew.-% (250 g) Natriumhydroxid gelöst wurden.
∘ Die Chitosan-Lösung wurde in einen Jet Cutter (Strahlschneidegerät) gefüllt und ins Regenerationsbad geschossen. Nach je 1 L Chitosan-Zugabe wurden 20 g Natriumhydroxid zum Regenerationsbad zugegeben, bevor ein weiterer Liter Chitosan-Lösung auf diese Weise verarbeitet wurde.

### • Alterung, Waschen, Lösungsmittelaustausch (falls notwendig) und Trocknung

∘ Die so hergestellten Chitosan-Beads alterten über Nacht in der Natriumhydroxid-Lösung.
∘ Der pH-Wert der Lösung wurde mit Essigsäure auf 8-9 eingestellt.
∘ Die Chitosan-Beads wurden zunächst mit Wasser gewaschen, bis eine elektrische Leitfähigkeit der Flüssigkeit erzielt war, die im Bereich von reinem Wasser liegt.
∘ Falls eine überkritische Trocknung notwendig war, wurde die Porenflüssigkeit gegen Ethanol (mind. 95 %) ausgetauscht.
∘ Nach der Trocknung der Chitosan-Beads erhielt man ein farbloses bis leicht gelbliches Material.

### • Herstellung der Komposite

∘ Die Komposite wurden sowohl direkt während der Herstellung der Lösung des Chitosanpolymers, als auch nachträglich durch Vermischen erzeugt.
∘ Herstellung in der Lösung: Die Chitosan-Aerogele wurden wie beschrieben synthetisiert. 10 bis 90 Gew.-%, des Additivs recovered Carbon Black (rCB) wurden zusammen mit Chitosan der Lösung beigefügt.
∘ Herstellung durch Mischung: Die getrockneten Chitosan-Aerogele wurden nach ihrer Karbonisierung in einer Schwingmühle bei 30 Hz für 300 Sekunden gemahlen. Anschließend wurden diese mit 10 bis 90 Gew.-% des Additivs recovered Carbon Black (rCB) vermischt.

### • Karbonisierung

∘ Chitosan, Chitosan-Aerogele bzw. -Komposite wurden in Inertgasatmosphäre bei 700 bis 1000 °C für eine bis mehrere Stunden lang karbonisiert. Sie können bei Bedarf thermisch (N₂, Ar) oder chemisch (z.B. CO₂, K₂CO₃) aktiviert werden.

### • Zerkleinerung

∘ Die Kohlenstoff-Aerogele bzw. -Komposite werden in einer Schwingmühle 300 Sekunden lang bei 30 Hz gemahlen.

## Patentansprüche

1. Kohlenstoff-Aerogel-Komposit auf der Basis von Chitosan und recycelter Aktivkohle (rCB), **dadurch gekennzeichnet, dass** die Aktivkohle (rCB) frei von Asche, silikatischen Verbindungen und Zinkkomponenten ist und das Komposit eine Leitfähigkeit, gemessen mit der Vier-Punkt-Methode von wenigstens 20 S/m gemessen bei einem Druck von 3 MPa hat.

2. Komposit nach Anspruch 1, **dadurch gekennzeichnet, dass** es 1 bis zu 90 Gew.-% der Aktivkohle (rCB) bezogen auf die Menge an Aerogel enthält.

3. Komposit nach Anspruch 1 oder 2, **dadurch gekennzeichnet, dass** es überwiegend meso- und makroporös ist, wobei insbesondere das Meso- und Makroporenvolumen gemessen mit Stickstoffsorption bei 77 K mindestens 0,1 cm³/g, insbesondere mindestens 0,4 cm³/g beträgt.

4. Komposit nach einem der Ansprüche 1 bis 3, **dadurch gekennzeichnet, dass** es Stickstoff in der Struktur bestimmt mittels Elementaranalyse von mindestens 1,5 Gew.-% enthält.

5. Komposit nach einem der Ansprüche 1 bis 4, **dadurch gekennzeichnet, dass** das resultierende Aerogel oder Komposit kugel-, reis-, beziehungsweise nudelförmig ist, wobei die Aktivkohle (rCB) im Aerogel homogen verteilt ist.

6. Verfahren zur Herstellung eines Komposits nach einem der Ansprüche 1 bis 5, **dadurch gekennzeichnet, dass** man
(a) recyclierte Aktivkohle (rCB) während der Synthese des Chitosan-Aerogels der Polymer-Lösung des Chitosans zugibt oder
(b) die Aktivkohle (rCB) mit dem auf Chitosan basierten gegebenenfalls karbonisierten-Aerogel vermischt und
(c) die Karbonisierung des gemäß (a) oder (b) erhaltenen Materials nach an sich bekannten Verfahren durchführt.

7. Verfahren nach Anspruch 6, **dadurch gekennzeichnet, dass** man Chitosan als Ausgangsmaterial zur Herstellung der Aerogele einsetzt.
